# DEMANDE DE BREVET EUROPEEN

(11) **EP 2 042 421 A1**
(43) Date de publication de la demande: **01.04.2009**
(21) Numéro de dépôt: 07380221.7
(22) Date de dépôt: 26.07.2007
(51) Int. Cl.: B62M 1/12, B62K 3/00, B62K 5/00

(54) **Moyen de locomotion à propulsion humaine**

(71) Demandeur: Contesti Jaume, Benito, Palma De Mallorca, 07007 Baleares (ES)
(72) Inventeur: La désignation de l'inventeur n'a pas encore été déposée
(74) Mandataire: Renaud-Goud, Thierry

(57) **Abrégé**

La présente invention concerne un moyen de locomotion (1) d'un utilisateur à propulsion humaine comportant une planche (2) ainsi qu'un premier et un deuxième ensembles roulants (10, 20), ledit moyen de locomotion (1) étant muni d'une part d'un moyen de guidage (11, 12, 40, 41, 42, 43, 44) pour orienter ledit premier ensemble roulant (10, 50, 51, 52, 22, 23) par rapport à un axe longitudinal (AX1) de ladite planche (2) et, d'autre part, d'un moyen d'entraînement (11, 12, 13, 14, 4, 31) pour mettre en mouvement ledit deuxième ensemble roulant (30, 21, 22, 23). Le moyen d'entraînement est pourvu d'un moyen d'actionnement primaire (13, 14), mis en mouvement par lesdits pieds de l'utilisateur, et d'un moyen d'actionnement secondaire (11, 12) articulé au dit moyen d'actionnement primaire (13, 14) et mis en mouvement par les bras dudit utilisateur.

## Description

La présente invention concerne un moyen de locomotion à propulsion humaine permettant à un utilisateur de se déplacer rapidement, la force motrice de ce moyen de locomotion étant uniquement fournie par l'utilisateur.

On connaît un premier moyen de locomotion de ce type dénommé communément « bicyclette ».

Généralement, une bicyclette comporte un cadre portant une roue avant directrice et une roue arrière entraînée par un pédalier muni d'une première et d'une deuxième pédales.

Le cadre comporte de plus une selle sur laquelle est assis l'utilisateur. Ce dernier pousse alors sur les pédales à l'aide de ses pieds pour entraîner le pédalier et donc la roue arrière de la bicyclette.

Par suite, la roue arrière met en mouvement la bicyclette, l'utilisateur pouvant orienter la roue avant directrice à l'aide d'un guidon, mobile en rotation par rapport au cadre de la bicyclette, solidarisé à cette roue avant pour suivre une direction préférentielle.

Pour des raisons aérodynamiques, l'utilisateur tend à se pencher en avant pour offrir une résistance à l'air ambiant la plus faible possible.

Ce premier moyen de locomotion à propulsion humaine est très efficace mais présente tout de même un inconvénient. La position assise, voire même « allongée », de l'utilisateur peut s'avérer désagréable à court terme, l'utilisateur ressentant parfois des douleurs au niveau de son dos ou encore de son fessier.

On connaît un deuxième type de moyen de locomotion a propulsion humaine dénommé communément « trottinette ».

La trottinette est composée d'une planche portée généralement par deux roues, mais peut éventuellement comporter quatre roues.

Plus précisément, la trottinette est munie d'un guidon équipé d'une première roue, le guidon étant fixé sur la planche tout en étant libre d'effectuer un mouvement rotatif par rapport à cette planche.

De plus, la planche possède une roue arrière, éventuellement pourvue d'un système de freinage.

L'utilisateur pose alors un pied sur la planche et utilise son autre pied pour propulser la trottinette, en exerçant une pression sur le sol, la direction étant assurée à l'aide du guidon.

Contrairement à ce que l'on constate pour la bicyclette, l'utilisateur est donc en position verticale sur la trottinette et ne risque pas d'avoir des douleurs dues à une position assise.

Par contre, le pied de l'utilisateur servant à propulser la trottinette entre régulièrement en contact avec le sol ce qui génère des chocs pouvant être à l'origine de douleurs, et d'usure des chaussures de l'utilisateur.

En outre, bien que ludique, ce moyen de locomotion est relativement peu efficace comparé à une bicyclette. Son mode de propulsion limite en effet les vitesses atteignables par la trottinette et rend extrêmement difficile le franchissement de côte ce qui limite son utilisation. La trottinette est d'ailleurs plutôt considérée comme étant un jouet d'enfant et non pas un moyen de locomotion à proprement parler.

La présente invention a pour objet de proposer un moyen de locomotion à propulsion humaine efficace quel que soit le relief de la route parcourue et n'occasionnant pas de douleurs physiques à son utilisateur autres que celles provoquées par l'effort à produire pour propulser le moyen de locomotion.

Selon l'invention, un moyen de locomotion à propulsion humaine d'un utilisateur comporte une planche ainsi qu'un premier et un deuxième ensembles roulants, le moyen de locomotion étant de plus muni d'une part d'un moyen de guidage pour orienter le premier ensemble roulant par rapport à un axe longitudinal de la planche et, d'autre part, d'un moyen d'entraînement pour mettre en mouvement le deuxième ensemble roulant.

L'invention est remarquable en ce que le moyen d'entraînement est pourvu d'un moyen d'actionnement primaire, mis en mouvement par les pieds de l'utilisateur, et d'un moyen d'actionnement secondaire articulé au moyen d'actionnement primaire et mis en mouvement par les bras de l'utilisateur.

De plus, le moyen d'actionnement primaire comporte un premier et un deuxième arbres d'actionnement équipés chacun d'un support d'un pied de l'utilisateur.

Cet utilisateur dispose alors son pied gauche sur le support du premier arbre d'actionnement et son pied droit sur le support du deuxième arbre d'actionnement. L'utilisateur est donc debout sur le support et tient le moyen d'actionnement secondaire avec ses mains.

Par conséquent, l'utilisateur n'est pas assis sur une selle et ne risque pas d'avoir des douleurs au niveau de son fessier.

Par ailleurs, afin de faire avancer le moyen de locomotion, l'utilisateur va réaliser d'une part des mouvements d'avant en arrière avec le moyen d'actionnement secondaire et, d'autre part, un mouvement elliptique avec ses pieds pour mettre en oeuvre le moyen d'actionnement primaire. Ainsi, ses pieds n'entrent pas en contact avec le sol et ne risquent pas d'être à l'origine de douleurs dues à un choc répété.

Avantageusement, le moyen d'actionnement secondaire comporte un premier et un deuxième manches, les premier et deuxième manches étant respectivement articulés sur les premier et deuxième arbres d'actionnement via une première et une deuxième articulations.

L'utilisateur va donc saisir les premier et deuxième manches avec ses mains. Le mouvement de ces manches, c'est-à-dire du moyen d'actionnement secondaire, amplifie alors les mouvements du moyen d'actionnement primaire de part les première et deuxième articulations qui les lient.

Concrètement, l'utilisateur met en mouvement le moyen d'actionnement primaire d'une part à l'aide de ses pieds qui agissent sur les supports des arbres d'actionnement, et d'autre part, à l'aide du moyen d'actionnement secondaire, un déplacement d'un manche générant nécessairement un déplacement de l'arbre d'actionnement auquel il est solidarisé via une articulation primaire.

En outre, le moyen d'entraînement est muni d'une roue, agencée sur la planche via des moyens de soutien, mise en rotation par le moyen d'actionnement primaire.

Le moyen d'actionnement primaire comportant un premier et un deuxième arbres d'actionnement, les premier et deuxième arbres d'actionnement sont respectivement agencés, via une troisième et une quatrième articulations, sur une première et deuxième faces externes de la roue pour l'entraîner en rotation.

De plus, les troisième et quatrième articulations des arbres d'actionnement sont agencés de manière symétrique par rapport au centre de la roue, et donc selon un même diamètre de cette roue.

En mettant en mouvement le moyen d'actionnement primaire, à l'aide des ses pieds mais aussi de ses mains via le moyen d'actionnement secondaire, l'utilisateur entraîne en rotation une roue agencée en élévation sur la planche.

Le deuxième ensemble roulant étant de préférence muni d'un arbre de transmission solidarisé à au moins une jante recouverte d'un pneumatique, la roue est liée à au moins un pignon solidarisé à l'arbre de transmission pour pouvoir mettre en rotation le deuxième ensemble roulant.

En effet, la roue répercute son mouvement rotatif au pignon de l'arbre de transmission. Selon une variante de l'invention, la roue est munie de dents qui coopèrent avec le pignon alors que selon une variante préférée de l'invention la roue entraîne ledit pignon via un lien sans fin tel qu'une chaîne par exemple.

L'arbre de transmission effectue donc un mouvement rotatif, sous l'impulsion de la roue, et entraîne la jante munie de son pneumatique.

Le deuxième ensemble roulant propulse alors le moyen de locomotion

Pour pouvoir permettre la franchissement d'un relief à fort dénivelé, l'arbre de transmission comporte une pluralité de pignons et un dérailleur éventuellement commandé par un changement de vitesse disposé sur l'un des manches par exemple.. La roue est alors reliée aux pignons via un lien sans fin, une chaîne qui coopère avec des dents périphériques de la roue et des pignons par exemple, et qui est guidée par le dérailleur.

Par conséquent, en fonction du relief, il est possible de changer de braquet pour minimiser les efforts à fournir par l'utilisateur afin de propulser le moyen de locomotion.

Par ailleurs, le moyen de guidage du moyen de locomotion comporte une barre de direction qui est articulée sur le moyen d'actionnement secondaire.

Le moyen d'actionnement secondaire ayant éventuellement un premier et un deuxième manches, la barre de direction est articulée d'une part sur le premier manche et d'autre part sur le deuxième manche, via une première et une deuxième rotules par exemple.

De préférence, le moyen de locomotion comportant un mat s'élevant de la planche en élévation, le moyen de guidage est muni d'une barre de liaison qui traverse ce mât en étant libre d'effectuer un mouvement rotatif autour d'un axe de symétrie de cette barre de liaison, la barre de liaison étant solidarisée à la barre de direction.

Ainsi, le moyen d'actionnement secondaire permet d'incliner la barre de direction pour la faire tourner autour de son axe de symétrie, cet axe de symétrie étant aussi l'axe de symétrie longitudinal de la barre de liaison.

De plus, le moyen de guidage comporte une plaque solidarisée à la barre de liaison, cette plaque étant munie d'un premier et d'un deuxième câbles de direction qui peuvent être agencés dans une gaine de protection.

Les premier et deuxième câbles de direction sont alors respectivement fixés sur une première extrémité fixe d'un premier axe de fixation du deuxième ensemble roulant et sur une deuxième extrémité fixe d'un deuxième axe de fixation du deuxième ensemble roulant.

Or, le deuxième ensemble roulant comporte un arbre de direction fixé d'une part à ladite première extrémité fixe du premier axe de fixation via une cinquième articulation et, d'autre part, à ladite deuxième extrémité fixe du deuxième axe de fixation via une sixième articulation.

Par suite, lorsque l'utilisateur déplace la barre de direction, cette barre répercute son mouvement sur ladite plaque qui tire un des câbles de direction. Ce câble exerce à son tour une tension sur l'extrémité fixe à laquelle il est lié ce qui provoque la rotation du deuxième ensemble roulant.

Plus précisément, le deuxième ensemble roulant comportant l'arbre de direction ainsi qu'un premier et un deuxième axes de direction solidarisés chacun à une jante recouverte d'un pneumatique, les premier et deuxième axes de direction, ainsi que les jantes et pneumatiques associés, sont orientés pour présenter une angulation différente par rapport à l'axe longitudinal de la planche.

Afin de pouvoir effectuer cette rotation, les premier et deuxième axes de fixation ont chacun une extrémité libre traversée par un moyen de fixation solidarisé à la planche, chaque axe de fixation étant apte à effectuer un mouvement rotatif autour du moyen de fixation traversant son extrémité libre.

Par ailleurs, le moyen d'actionnement secondaire comportant un premier et un deuxième manches, au moins un des manches comportent un moyen de freinage d'au moins un ensemble roulant de manière à ralentir, voire même stopper le moyen de locomotion si nécessaire.

Enfin, on note que le mât est éventuellement pliable ce qui permet de minimiser l'encombrement du moyen de locomotion lorsque l'utilisateur ne s'en sert pas.

L'invention et ses avantages apparaîtront avec plus de détails dans le cadre de la description qui suit avec un exemple de réalisation donné à titre illustratif en référence aux figures annexées qui représentent :
- la figure 1, une vue isométrique schématique de l'invention,
- la figure 2, une vue de dessus du premier ensemble roulant, et,
- la figure 3, une vue de côté du deuxième ensemble roulant.

Les éléments présents dans plusieurs figures distinctes sont affectés d'une seule et même référence.

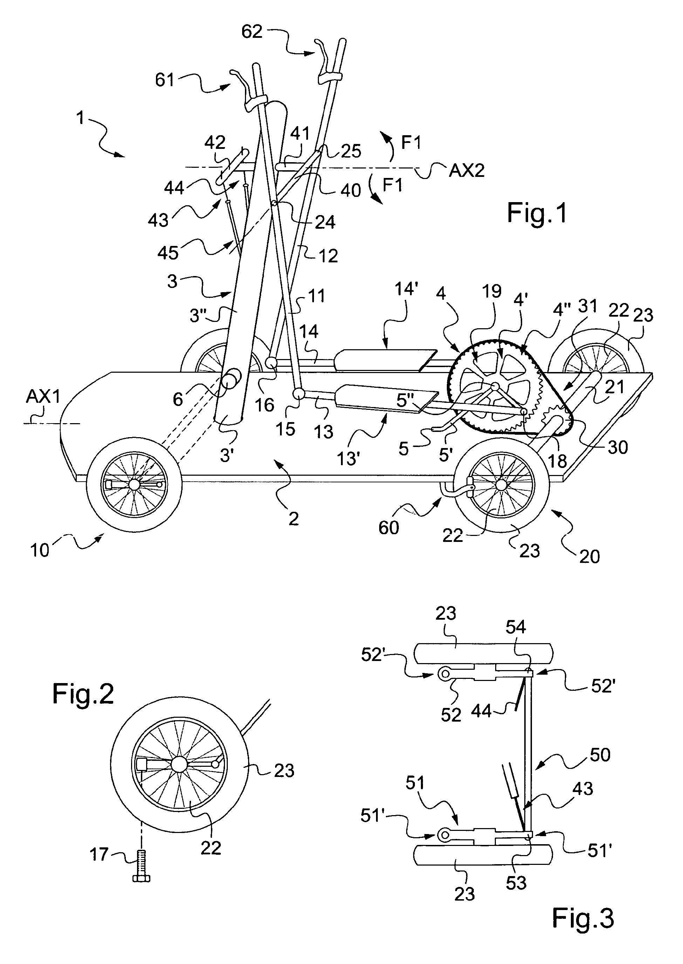

La figure 1 présente une vue isométrique schématique d'un moyen de locomotion 1 à propulsion humaine selon l'invention.

Ce moyen de locomotion 1 comporte une planche 2, qui repose sur un premier et deuxième ensembles roulants 10, 20, et un mât 3 qui s'élève de la planche 2. A titre de variante, il est envisageable de remplacer la planche 2 par une base tubulaire non représentée sur les figures.

Le premier ensemble roulant 10 a notamment pour fonction de diriger le moyen de locomotion 1 alors que le deuxième ensemble roulant 20 permet de propulser le moyen de locomotion 1.

Par suite, ce moyen de locomotion 1 est muni d'un moyen d'entraînement du deuxième ensemble roulant 20 et d'un moyen de guidage du premier ensemble roulant 10 qui oriente ce premier ensemble roulant 10 par rapport à l'axe longitudinal AX1 de la planche 2.

Plus précisément, le moyen d'entraînement comporte un moyen d'actionnement primaire et un moyen d'actionnement secondaire actionnés par un utilisateur pour mettre en mouvement le deuxième ensemble roulant 20 et donc le moyen de locomotion 1.

Ainsi, le moyen d'actionnement primaire est muni d'un premier et un deuxième arbres d'actionnement 13, 14 ayant chacun un support de pied 13', 14'.

De même, le moyen d'actionnement secondaire comporte un premier et un deuxième manches 11, 12. ces premier et deuxième manches 11, 12 sont respectivement liés aux premier et deuxième arbres d'actionnement 13, 14 par une première et une deuxième articulations.

L'utilisateur du moyen de locomotion se tient alors debout sur les supports de pied 13', 14' du moyen d'actionnement primaire, tout en tenant les premier et deuxième manches 11, 12 du moyen d'actionnement secondaire à l'aide de ses mains.

Par ailleurs, le moyen d'entraînement possède une roue 4 solidarisée à la planche 2 par un moyen de soutien 5. On note que le plan contenant la roue 4 est perpendiculaire à la planche 2.

De plus, le moyen de soutien 5 est par exemple muni de deux tiges 5' agencées de part et d'autre des première et deuxième faces externes 4', 4" de la roue 4. Ces tiges 5' s'élèvent alors de la planche 2 et supportent un pion 5" traversant le centre de la roue 4.

Par suite, la roue 4 est libre d'effectuer un mouvement rotatif autour du pion 5".

Afin de provoquer ce mouvement rotatif, le moyen d'actionnement primaire est fixé à la roue 4. En effet, le premier arbre d'actionnement 13 est solidarisé à la première face externe 4' de la roue 4 via une troisième articulation 18, alors que le deuxième arbre d'actionnement 14 est solidarisé à la deuxième face externe 4" de cette roue 4 via une quatrième articulation 19.

Les troisième et quatrième articulations sont de plus avantageusement agencées de façon symétrique sur la roue 4 par rapport au centre de cette roue 4.

Lorsque l'utilisateur tire sur les premier et deuxième manches 11, 12 d'avant en arrière, il déplace les premier et deuxième arbres d'actionnement 13, 14. Evidemment, il facilite ce déplacement des premier et deuxième arbres d'actionnement 13, 14 en agissant sur les supports de pied 13', 14' à l'aide de ces pieds, ces derniers reproduisant sensiblement les mouvements effectués lors d'une marche à pied classique.

Les premier et deuxième arbres d'actionnement 13, 14 du moyen d'actionnement primaire exerce alors des efforts sur la périphérie de la roue 4 qui est ainsi entraînée en rotation autour du pion 5".

On remarquera que les mouvements de l'utilisateur sont très naturels et s'apparentent aux mouvements d'un marcheur. En outre, l'utilisateur n'est pas assis sur une selle et n'a pas à subir des chocs répétés avec le sol ce qui garantit l'absence de désagréments physiques, autre que ceux provoqués par la fatigue musculaire induite par ses mouvements.

De plus, l'effort généré par les pieds de l'utilisateur sur les supports 13', 14' peut suffire pour entraîner en rotation la roue 4. Toutefois, il semble plus naturel de s'aider de ses bras, d'autant plus que l'apport des bras, via le moyen d'actionnement secondaire, est loin d'être négligeable pour la propulsion du moyen de locomotion 1.

Par ailleurs, le deuxième ensemble roulant est équipé d'un arbre de transmission 21, solidarisé à la planche 2 par des moyens usuels, disposant à chacune de ses bouts d'une jante 22 recouverte d'un pneumatique 23 qui saillent de cette planche 2.

En outre, l'arbre de transmission 22, représenté sur la figure 1, est pourvu d'un pignon 30 relié à la roue 4 par un lien sans fin, à savoir une chaîne 31. La roue 4 et le pignon 30 sont alors munis de dents qui coopèrent avec la chaîne 31.

Dans ces conditions, un mouvement rotatif de la roue 4 génère un déplacement de la chaîne 31 qui entraîne en rotation le pignon 30 et donc l'arbre de transmission 21.

En se servant des moyens d'actionnement primaire et secondaire, un utilisateur induit donc un mouvement rotatif du deuxième ensemble roulant qui propulse alors le moyen de locomotion 1.

On comprend bien que, de façon usuelle, la planche 2 est éventuellement munie de lumières pour que le pignon 30, la roue 4 et la chaîne 30 ne rentrent pas en contact avec cette planche 2, la présence de ces lumières dépendant de l'agencement du deuxième ensemble roulant.

De plus, pour faciliter le franchissement d'une colline par exemple, il est possible d'équiper le moyen de locomotion d'une pluralité de pignons de diamètre différents et d'un dérailleur non représentés.

En commandant ce dérailleur, à l'aide d'un moyen adapté, agencé sur un des premier et deuxième manches 11, 12, l'utilisateur pourrait alors changer le braquet développé en fonction du relief à franchir.

La propulsion du moyen de locomotion 1 est donc assurée par un moyen d'entraînement. A contrario, l'utilisateur va diriger le moyen de locomotion à l'aide d'un moyen de guidage.

Ce moyen de guidage comporte en premier lieu une barre de direction 40 articulée sur le moyen d'actionnement secondaire, à savoir les premier et deuxième manches 11, 12, à l'aide d'une première et d'une deuxième rotules24, 25.

En second lieu, le moyen de guidage est muni d'une barre de liaison 41 qui traverse de part en part le mât 3, en étant néanmoins apte à effectuer un mouvement rotatif autour de son axe de symétrie AX2.

Un côté de cette barre de liaison 41 est donc pourvu de la barre de direction 40 alors que son autre côté et équipé dune plaque 42, parallèle à la barre de direction 40.

On constate sur la figure 1 que les zones extrémales de la plaque 42 sont solidarisées à un premier et un deuxième câbles de direction 43, 44, chaque câble de direction 43, 44 étant éventuellement protégé dans une gaine 45.

En référence à la figure 2, le premier ensemble roulant 10 est muni d'un arbre de direction solidarisé à une première et une deuxième extrémités fixes 51', 52' d'un premier et d'un deuxième axes de fixation 51, 52, respectivement via une cinquième et une sixième articulations 53, 54.

Les premier et deuxième câbles de fixation 43, 44 sont alors respectivement fixés sur les première et deuxième extrémités fixes 51', 52'.

Par ailleurs, en référence aux figures 2 et 3, on note que chaque axe de fixation 51, 52 est solidarisé à une jante recouverte d'un pneumatique.

Enfin, pour que les jantes recouvertes de pneumatiques du premier ensemble roulant 10 puissent être orientées par rapport à l'axe longitudinal AX1, les premier et deuxième axes de fixations 51, 52 ont chacun une extrémité libre 51", 52", proches de l'axe de rotation 22' de la jante 22 à laquelle l'axe de fixation 51, 52 est solidarisé, traversée par un moyen de fixation, un boulon 17 par exemple, fixé sur la planche 2.

Les axes de fixations 51, 52 peuvent alors effectuer un mouvement rotatif autour de leur moyen de fixation.

En outre, on comprend que l'arbre de direction 50 a une longueur L plus importante que celle de la planche 2 afin que les jantes recouvertes de pneumatiques du premier ensemble roulant puissent être orientées sans entrer en contact avec la planche 2.

Conformément à la figure 1, en déplaçant vers le bas le premier manche 11 et vers la haut le deuxième manche 12, l'utilisateur induit une rotation de la barre de direction 40 autour de l'axe de symétrie AX2 selon les flèches F1.

Par suite, la barre de direction 40 entraîne dans son mouvement rotatif la barre de liaison 41 et donc la plaque 42.

Le deuxième câble de direction 44 monte alors à son tour et tire sur la deuxième extrémité fixe 52'. Le deuxième axe de fixation 52 tourne alors autour du moyen de fixation traversant son extrémité libre 52" dans le sens dextrorsum.

Cette rotation du deuxième axe de fixation génère une translation de l'arbre de direction 50 qui impose un mouvement rotatif dans le sens dextrorsum au premier axe de fixation 51.

Les jantes 22 recouvertes de pneumatiques 23 du premier ensemble restent donc parallèles l'une à l'autre et présentent la même angulation par rapport à l'axe longitudinal AX1.

En faisant monter le premier manche 11, au lieu du deuxième manche 12, le premier câble de direction 43 exercera une tension sur le premier axe de fixation 51 et fera tourner les jantes 22 recouvertes de pneumatiques 23 dans le sens contraire au sens mentionné précédemment.

On remarque qu'il a été nécessaire de faire monter le deuxième manche 12, et donc le bras droit de l'utilisateur pour que le premier ensemble roulant tourne vers la droite.

Ce mouvement n'est pas vraiment naturel puisque par exemple contraire au mouvement qu'effectue un automobiliste pour faire tourner automobile.

Pour éviter de contrarier les mouvements habituels d'un utilisateur, il est alors concevable de relier les premier et deuxième câbles de direction 43, 44 respectivement au deuxième et première extrémités fixes 52', 51' du premier ensemble roulant.

De plus, le moyen de locomotion comporte avantageusement au moins un système de renvoi d'angle non représenté sur les figures, ce système de renvoi d'angles étant solidarisé à la planche 2. Ainsi, les premier et deuxième câbles de direction 43, 44 descendant de la plaque 42 sensiblement verticalement, c'est-à-dire suivant une direction dirigée selon la pesanteur, le système de renvoi d'angles orientera ces premier et deuxième câbles de direction 43, 44 afin qu'il soit sensiblement contenu dans un plan de direction, sensiblement horizontal, renfermant les premier et deuxième axes de fixations 51, 52.

Par ailleurs, s'il est possible de guider le moyen de locomotion 1 à l'aide du moyen de guidage et de propulser ce moyen de locomotion 1 avec le moyen d'entraînement, il convient de pouvoir arrêter le déplacement du moyen de locomotion 1 si nécessaire.

Le moyen de locomotion 1 comporte donc un dispositif de freinage.

Par exemple, ce dispositif de freinage comporte un premier moyen de freinage 61 qui commande des mâchoires de freinage 60 agencées autour des pneumatiques du deuxième ensemble roulant 20, ie moyen de freinage 61 étant une gâchette reliée auxdites mâchoires par un câble de frein,.

De même, le dispositif de freinage peut comporter un deuxième moyen de freinage 62 qui commande des mâchoires de freinage, non représentées sur les figures, agencées autour des pneumatiques du premier ensemble roulant 10.

Pour des raisons esthétiques, le mât 3 peut être creux afin que les câbles de frein et de direction passe par l'intérieur de ce mât 3. Cette caractéristique évite aussi que l'utilisateur tire sur un câble par accident.

Enfin, le mat 3 est avantageusement constitué d'une partie inférieure 3' solidarisée à la planche 2, et d'une partie supérieure 3" traversée par la barre de liaison 41. Les parties inférieure 3' et supérieure 3" du mat 3 sont alors liées par un moyen de liaison 6 usuel permettant de régler l'angulation séparant les parties inférieure 3' et supérieure 3".

Ainsi, le mât 3 est pliable ce qui permet de réduire l'encombrement du moyen de locomotion.

En utilisation, les parties inférieure 3' et supérieure 3" du mât 3 sont par exemple alignées alors qu'elles seront sensiblement perpendiculaires l'une à l'autre lorsque le mât 3 sera plié.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Pour des raisons de sécurité, et même esthétique, ii est aussi possible d'envisager de protéger les éléments du moyen de locomotion qui présentent des arêtes vives, en disposant un carénage autour de la roue 4 par exemple.

## Revendications

1. Moyen de locomotion (1) d'un utilisateur à propulsion humaine comportant une planche (2) ainsi qu'un premier et un deuxième ensembles roulants (10, 20), ledit moyen de locomotion (1) étant muni d'une part d'un moyen de guidage (11, 12, 40, 41, 42, 43, 44) pour orienter ledit premier ensemble roulant (10, 50, 51, 52, 22, 23) par rapport à un axe longitudinal (AX1) de ladite planche (2) et, d'autre part, d'un moyen d'entraînement (11, 12, 13, 14, 4, 31) pour mettre en mouvement ledit deuxième ensemble roulant (30, 21, 22, 23),
**caractérisé en ce que** ledit moyen d'entraînement est pourvu d'un moyen d'actionnement primaire (13, 14), mis en mouvement par lesdits pieds de l'utilisateur, et d'un moyen d'actionnement secondaire (11, 12) articulé au dit moyen d'actionnement primaire (13, 14) et mis en mouvement par les bras dudit utilisateur.

2. Moyen de locomotion selon la revendication 1,
**caractérisé en ce que** ledit moyen d'actionnement primaire comporte un premier et un deuxième arbres d'actionnement (13, 14) équipés chacun d'un support (13', 14') d'un pied de l'utilisateur.

3. Moyen de locomotion selon la revendication 2,
**caractérisé en ce que** ledit moyen d'actionnement secondaire comporte un premier et un deuxième manches (11, 12), lesdits premier et deuxième manches (11, 12) étant respectivement articulés sur lesdits premier et deuxième arbres d'actionnement (13, 14).

4. Moyen de locomotion selon l'une quelconque des revendications précédentes,
**caractérisé en ce que** ledit moyen d'entraînement est muni d'une roue (4), agencée sur ladite planche (2) via des moyens de soutien (5), mise en rotation par ledit moyen d'actionnement primaire (13, 14).

5. Moyen de locomotion selon la revendication 4,
**caractérisé en ce que,** ledit moyen d'actionnement primaire comportant un premier et un deuxième arbres d'actionnement (13, 14), lesdits premier et deuxième arbres d'actionnement (13, 14) sont respectivement agencés sur une première et deuxième faces externes (4', 4") de ladite roue (4) pour l'entraîner en rotation.

6. Moyen de locomotion selon l'une quelconque des revendications 4 à 5,
**caractérisé en ce que,** ledit deuxième ensemble roulant (20) étant muni d'un arbre de transmission (21) solidarisé à au moins une jante (22) recouverte d'un pneumatique (23), ladite roue (22) est liée à au moins un pignon (30) solidarisé au dit arbre de transmission (21) pour pouvoir mettre en rotation ledit deuxième ensemble roulant (20).

7. Moyen de locomotion selon la revendication 6,
**caractérisé en ce que,** ledit arbre de transmission (20) comportant une pluralité de pignons (30), ladite roue est liée auxdits pignons via un lien sans fin (31) et un dérailleur.

8. Moyen de locomotion selon l'une quelconque des revendications 1 à 7,
**caractérisé en ce que,** ledit moyen de guidage comporte un barre de direction (40) articulée sur le moyen d'actionnement secondaire (11, 12).

9. Moyen de locomotion selon la revendication 8,
**caractérisé en ce que,** le moyen d'actionnement secondaire comportant un premier et un deuxième manches (11, 12), ladite barre de direction est articulée d'une part sur le premier manche (11) et d'autre part sur le deuxième manche (12).

10. Moyen de locomotion selon l'une quelconque des revendications 8 à 9,
**caractérisé en ce que,** ledit moyen de locomotion comportant un mât (3) s'élevant en élévation de ladite planche (2), ledit moyen de guidage est muni d'une barre de liaison (41) qui traverse ledit mât (3) en étant libre d'effectuer un mouvement rotatif autour d'un axe de symétrie (AX2) de ladite barre de liaison (41), ladite barre de liaison (41) étant solidarisée à ladite barre de direction (40).

11. Moyen de locomotion selon la revendication 10,
**caractérisé en ce que** ledit mât (3) est pliable.

12. Moyen de locomotion selon l'une quelconque des revendications 10 à 11,
**caractérisé en ce que** ledit moyen de guidage comporte une plaque (42) solidarisée à ladite barre de liaison (41), ladite plaque (42) étant munie d'un premier et d'un deuxième câbles de direction (43, 44).

13. Moyen de locomotion selon la revendication 12,
**caractérisé en ce que** lesdits premier et deuxième câbles de direction (43, 44) sont respectivement fixés sur une première extrémité fixe (51') d'un premier axe de fixation (51) et sur une deuxième extrémité fixe (52') d'un deuxième axe de fixation (52).

14. Moyen de locomotion selon la revendication 13,
**caractérisé en ce que** ledit deuxième ensemble roulant (20) comporte un arbre de direction (50) articulé d'une part à ladite première extrémité fixe (51') du premier axe de fixation (51) et, d'autre part, à ladite deuxième extrémité fixe (52') du deuxième axe de fixation (52).

15. Moyen de locomotion selon l'une quelconque des revendications précédentes,
**caractérisé en ce que** lesdits premier et deuxième axes de fixation (51, 52) ont chacun une extrémité libre (51', 52') traversée par un moyen de fixation (17) solidarisé à ladite planche (2), chaque axe de fixation (51, 52) étant apte à effectuer un mouvement rotation autour dudit moyen de fixation (17) traversant son extrémité libre (51" 52").

16. Moyen de locomotion selon l'une quelconque des revendications précédentes,
**caractérisé en ce que,** le moyen d'actionnement secondaire comportant un premier et un deuxième manches (11, 12), au moins un desdits manches (11, 12) comportent un moyen de freinage (60) d'un moins un ensemble roulant (20).
